# EUROPEAN PATENT SPECIFICATION

(11) **EP 4 102 937 B1**
(45) Date of publication and mention of the grant of the patent: **18.11.2026**
(21) Application number: 22176335.2
(22) Date of filing: 31.05.2022
(51) Int. Cl.: H05B 6/12

(54) **ELECTRIC RANGE**
ELEKTROHERD
CUISINIÈRE ÉLECTRIQUE

(30) Priority: 10.06.2021 KR 20210075511
(43) Date of publication of application: 14.12.2022
(73) Proprietor: LG Electronics Inc., SEOUL 07336 (KR)
(72) Inventor: PARK, Myoeng Soo, 08592 Seoul (KR); CHO, Junghyeon, 08592 Seoul (KR)
(74) Representative: Vossius & Partner Patentanwälte Rechtsanwälte mbB

(56) References cited:
- EP-A2- 1 991 030
- WO-A1-2013/080404
- US-A1- 2015 114 953
- US-A1- 2018 376 542

## Description

### BACKGROUND

### [Technical Field]

The present disclosure relates to an electric range, more particularly, to an electric range that may effectively increase output of a heating portion by optimizing the shape of each ferrite core without increasing the number of the ferrite cores and may secure the maximum area of the through hole that facilitates communication between the inside and outside of the core frame, thereby preventing overheating of the heating portion and the decrease of the use time of the heating portion.

### [Background of the Disclosure]

Various types of cooking utensils or electric appliances are used to heat food at home or in a restaurant. Such cooking electric appliances may include gas range using gas and electric ranges using electricity.

An electric range may be largely classified into a resistance heating type and an induction heating type.

An electrical resistance type may generate heat by applying a current to a non-metallic heating element such as a metal resistance wire and silicon carbide, and may heat an object (e.g., a cooking vessel or container such as a pot or a frying fan) by radiating or conducting the generated heat.

An induction heating type may apply high-frequency power to a coil and generate a magnetic field around the coil, and may heat a heating target made of a metal material by using an eddy current generated in the magnetic field.

In other words, when a current is applied to a working coil or a heating coil, a heating target may be induction-heated to generate heat and the heating object may be heated by the generated heat.

A conventional induction heating type electric range having the above configuration includes a heating portion on which a working coil is wound, and a cover plate disposed on an upper surface of the heating portion.

The cover plate may have a heating target seated thereon to be induction-heated.

In an electric range including a plurality of heating portions, a plurality of heating portions may generally have the same output or heating capacity, or at least one heating portion has a larger output or heating capacity than the other heating portions.

To have the larger output than the other heating portions, the one heating portion may be set to have a larger number of windings of the working coil or to have a larger volume ferrite core than the other heating portions.

In this regard, Korean Patent Application Laid-Open No. 10-2016-0150510 (Cited document 001) discloses a configuration in which a pair of ferrite cores having different volumes are alternately disposed in order to increase the output of the heating portion.

In Cited document 001, a total of five pairs of ferrite cores are radially disposed.

There is a clear limit to the overall size of the heating portion, and in order to further increase the output of the heating portion and to increase the volume of the ferrite core, the configuration must be changed in such a way that the ferrite core is radially disposed under the core frame of the heating portion.

If the number of the ferrite cores is increased, the ferrite cores must be disposed densely. Accordingly, the area of the ventilation holes communicating the inside and the outside of the core frame might be reduced or the area of the individual ventilation holes might be reduced.

If the area of the ventilation holes is reduced or the area of the individual ventilation holes is reduced, the heat inside the core frame could not be discharged to the outside and the temperature of the heating portion might rise abnormally.

At this time, if the temperature rises abnormally, there will be a problem that power supply to the heating portion might be urgently stopped or the actual operation time might become shorter than the scheduled operation time.

US 2018/376542 A1 relates to an induction heating device which includes a casing constituting a main body or outer appearance of the induction heating device, and a cover plate coupled to the casing to seal the casing.

EP 1 991 030 A2 relates to an induction hob and inference element for an induction hob.

US 2015/114953 A1 relates to an installation configuration of a heating coil in the induction heating cooking device.

WO 2013/080404 A1 relates to induction heating coils used in various induction heating devices.

### [Cited Documents]

### [Patent Documents]

Cited Document 001 10-2016-0025170

### SUMMARY

One object of the present disclosure is to provide an electric range that may optimize the shape of each ferrite core without increasing the number of the ferrite cores, thereby effectively increasing output of a heating portion.

A further object of the present disclosure is to provide an electric range that may secure the maximum area of the through hole that facilitates communication between the inside and outside of the core frame, thereby preventing overheating of the heating portion and the decrease of the use time of the heating portion.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

An electric range according to claim 1 is disclosed.

The plurality of ferrite cores may be arranged at equal intervals, respectively.

A thickness of the core body may be maintained constant while proceeding from the inner end to the outer end along the radial direction.

The first region may include a first lateral surface and a second lateral surface that are gradually spaced apart from each other while proceeding from the inner end toward the outside in the radial direction.

The first lateral surface may be extended from the inner end linearly and forming a first extension angle with respect to the radial direction, and the second lateral surface may be extended from the inner end linearly and forming a second extension angle with respect to the radial direction. The first extension angle may be equal to or larger than the second extension angle.

The length of the second lateral surface may be larger than the length of the first lateral surface.

The ferrite core may further include an extended bent portion protruded upward from an upper surface of the core body, and the extended bent portion may be integrally formed with the core body.

The extended bent portion may be integrally formed with the fourth region of the core body, and the width of the extended bent portion in a direction perpendicular to the radial direction may be equal to the width of the fourth region in a direction perpendicular to the radial direction.

The protrusion height of the extended bent portion protruded from the upper surface of the core body may be greater than the thickness of the core body.

The core frame may include a disk portion comprising an upper surface around which the working coil is wound and in which the trough hole is formed; and an edge wall extended downward from a radial outer end of the disk portion. The extended bent portion and the fourth region of the core body may be extended outward with respect to a radial direction after at least partially passing through the edge wall.

The extended bent portion may be disposed in a radially outer side of the edge wall after passing through the edge wall as a whole.

The core frame may further include a core accommodation portion protruded downward from a lower surface of the disk portion and configured to accommodate the ferrite core. The extended bent portion may be disposed in a radially outer end of the core accommodation portion, and the radially outer end of the core accommodation portion may be protruded outward with respect to a radial direction of the edge wall after passing through the edge wall.

An exposure hole may be provided in an upper surface of the radially outer end of the core accommodation portion, and the exposure hole is at least partially opened upward, and the upper end of the extended bent portion may be exposed outside through the exposure hole.

The present disclosure may have following advantages and effects. The electric range may optimize the shape of each ferrite core without increasing the number of the ferrite cores, thereby effectively increasing output of a heating portion.

In addition, the electric range secure the maximum area of the through hole that facilitates communication between the inside and outside of the core frame, thereby preventing overheating of the heating portion and the decrease of the use time of the heating portion.

Specific effects are described along with the above-described effects in the section of Detailed Description.

### [Description of Reference Numerals]

FIG. 1 is an exploded perspective view of an electric range according to an embodiment of the present disclosure;
FIG. 2 is an exploded perspective view showing the other parts of the electric range shown in FIG. 1, except a cover plate;
FIG. 3 is an exploded perspective view of a heating portion and an upper bracket that are shown in FIG. 2;
FIG. 4 is a perspective view showing an assembled state of a base bracket, a control circuit board module and a ventilation module disposed in a case shown in FIG. 2;
FIG. 5 is a perspective view showing a coupled state a control circuit board module and a ventilation module with respect to a base bracket shown in FIG. 4;

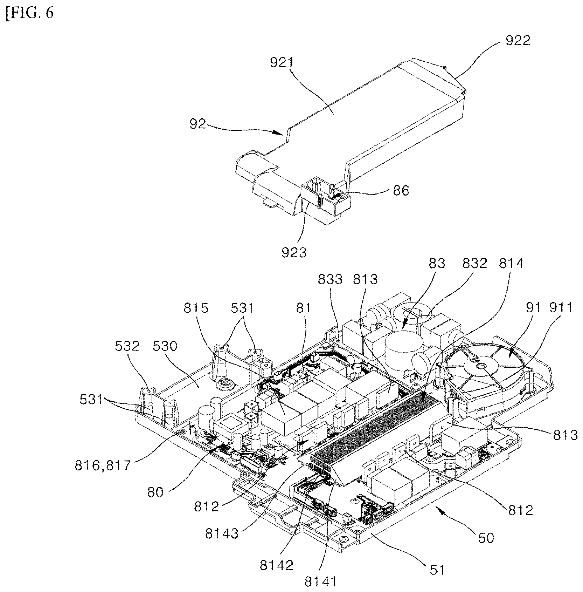

FIG. 6 is an exploded perspective view of an air guide cut away from FIG. 4;
FIG. 7 is a upward perspective view showing a state in which the first heating portion shown in FIG. 2 is coupled to a first upper bracket;
FIG. 8 is an exploded perspective view of the first heating portion shown in FIG. 7;
FIGS. 9 and 10 are a upward perspective view and a downward perspective view showing a state in which a ferrite core is coupled to a core frame shown in FIG. 7;
FIG. 11 is a perspective view of a ferrite core provided in the first heating portion; and
FIG. 12 is a plane view and a front view of the ferrite core shown in FIG. 11.

### [DESCRIPTION OF SPECIFIC EMBODIMENTS]

The above-described aspects, features and advantages are specifically described hereunder with reference to the accompanying drawings such that one having ordinary skill in the art to which the present disclosure pertains can easily implement the technical scope of the disclosure. In the *disclosure, detailed descriptions* of known technologies in relation to the disclosure *are* omitted if they are deemed to *make* the *gist* of the *disclosure* unnecessarily *vague.* Below, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component unless stated to the contrary.

Throughout the disclosure, each element may be singular or plural, unless stated to the contrary.

Hereinafter, expressions of 'a component is provided or disposed in an upper or lower portion' may mean that the component is provided or disposed in contact with an upper surface or a lower surface. The present disclosure is not intended to limit that other elements are provided between the components and on the component or beneath the component.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Terms such as "include" or "has" are used herein and should be understood that they are intended to indicate an existence of several components, functions or steps, disclosed in the specification, and it is also understood that greater or fewer components, functions, or steps may likewise be utilized.

Throughout the disclosure, the terms "A and/or B" as used herein can denote A, B or A and B, and the terms "C to D" can denote C or greater and D or less, unless stated to the contrary.

Hereinafter, the present disclosure will be described, referring to the accompanying drawings showing a configuration of an electric range 1 according to an embodiment.

### [Overall Composition of Electric Range]

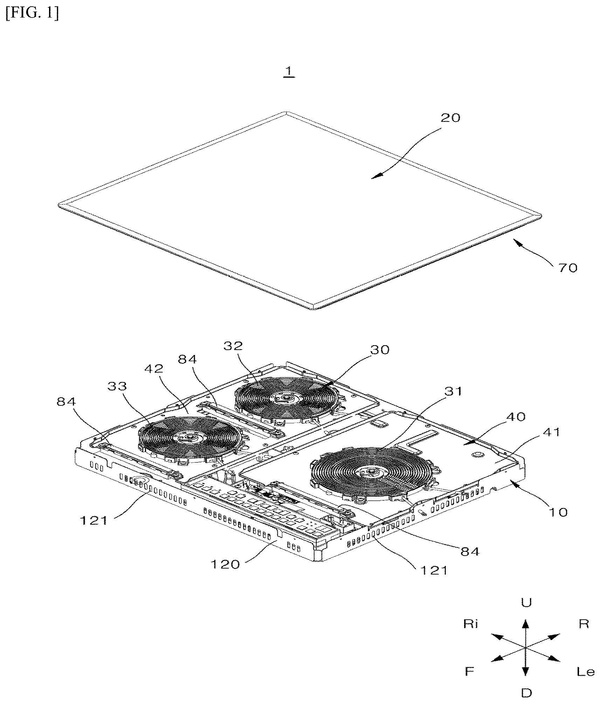

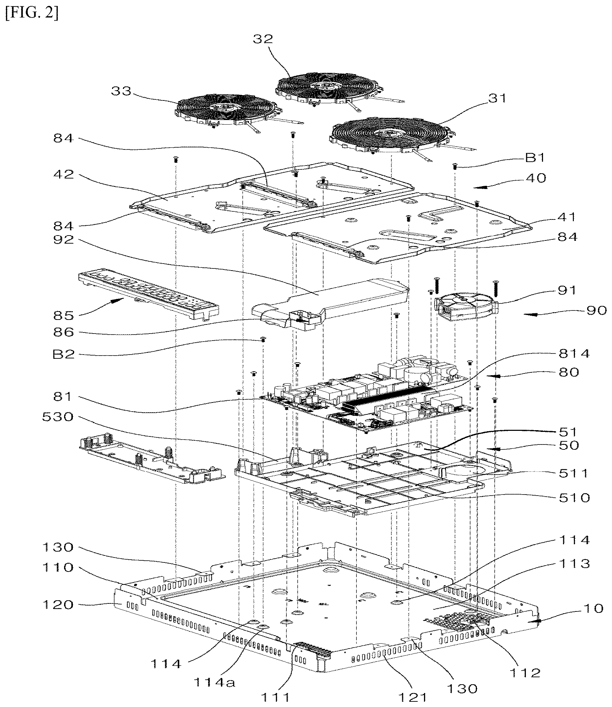

FIG. 1 is an exploded perspective view of an electric range 1 according to an embodiment of the present disclosure, in a state where a cover plate is separated therefrom. FIG. 2 is an exploded perspective view showing the other parts of the electric range shown in FIG. 1, except the cover plate. Referring to FIGS. 1 and 2, the configuration of the electric range 1 according to an embodiment will be described.

The electric range 1 according to this embodiment may be configured to heat a heating target based on an induction heating method. The heating target may be a tableware containing a metal material (e.g., stainless steel and iron).

In the induction heating method, high-frequency power may be applied to a working coil 31 to generate a magnetic field around a working coil 312, 322 and 332, and an eddy current generated by the magnetic field may be used in heating a heating target made of a metal material.

Specifically, high-frequency power may be applied to a heating portion 30 having a structure in which the working coil 31 is disposed adjacent to a ferrite core, so that a magnetic field may be generated around the working coil 31. When a heating target is placed in an area in the generated magnetic field, an eddy current may be induced in the heating object by the magnetic field and Joule's heat may be generated by the eddy current to heat the heating target. As the heating target is heated, the food contained in the heating target may be heated.

The electric range may include a cover plate 20, a heating portion 30, an upper bracket 40 and a base bracket 50.

The case 10 may be configured to define an exterior of the electric range and protect components composing the electric range. As one example, the case 10 may be made of a lightweight metal material such as aluminum and the present disclosure may not be limited thereto.

Meanwhile, the case 10 may be insulated to suppress heat generated by the working coil 31 from being radiated to the outside.

The case 10 may accommodate components constituting the electric range such as the heating portion 30, the upper bracket 40 and a control board module 90. A top of the case 10 may be open and the open top may be closed by the cover plate 20.

The case 10 may be formed in a box shape by processing a plate-shaped material.

The case 10 may include a first casing 110, a second casing 120.

The first casing 110 may define a bottom surface of the case 10. The first casing 110 may accommodate and support the internal components disposed in the above-described electric range in a downward direction.

A plurality of forming portions formed by press working may be provided as means for facilitating the accommodation and supporting of the internal components.

A downward forming portion 113 among the plurality of forming portions may be formed by press work to protrude the first casing 110 in a downward direction (D-direction) as a whole. The first casing 110 may be protruded in the downward direction so that a space in a vertical direction (U-direction) may be further secured for the internal components. In addition, the rigidity of the first casing 110 may be further increased.

An upward forming portion 114 may be protruded upward from the downward forming portion 113 (U-direction), and may be formed as a circular bead as shown in the drawing as one example.

The upward forming portion 114 may be formed in a plurality of positions, and may support a lower surface of a base bracket 50 which will be described below to fix the base bracket 50.

To secure the base bracket 50 by using a substrate fastening bolt, a bolt hole 114a through which a substrate fastening bolt passes may be formed in the upward forming portion 114. The substrate fastening bolt will be described in detail later.

That is, the substrate fastening bolt configured to secure the base bracket 50 may have a securing direction from the top to the bottom (D-direction).

In this instance, since the upward forming portion 114 is protruded from the downward forming portion 113, there may be a margin for preventing the board securing bolt from being extended downward over the first case 110.

Meanwhile, the first casing 110 may include an air inlet hole 112 for drawing air therein and an air outlet hole 111 for discharging air there from, to facilitate the cooling of the control circuit board module 80 provided therein and the circuit elements mounted on the control circuit board module 80.

As shown in FIG. 2, the air outlet hole 111 and the air inlet hole 112 may be provided in the form of a grill, thereby preventing the inflow of foreign substances.

The second casing 120 may be bent from the first casing 110 and configured to define a lateral surface of the case 110.

The second casing 120 may be bent from an edge of the first casing 110 in a vertical direction (U-D direction) to form a side wall of the electric range 1, so that the second casing 120 may be provided to surround the base bracket which will be described later.

The second casing 120 may be formed on each side of the first casing 110 formed in a substantially quadrangular shape. The second casing 120 may reinforce the rigidity of the entire case 10.

Specifically, the second casing 120 bent from the first casing 110 may be configured to suppress the plate-shaped first casing 110 from being bending or damaged by the weight of the internal components or an external force.

The second casing 120 may further include a ventilation hole 121 formed in a slit shape and it may be provided in plurality. The plurality of ventilation holes 121 may facilitate communication between the inside and the outside of the case 100 so that air may flow through the ventilation holes 121, thereby contributing to cooling of the internal components provided in the case 10.

Meanwhile, a supporting flange 130 may be provided in an upper end of the second casing 120.

The supporting flange 130 may be bent from the upper end of the second casing 120 toward the inside of the case 10, and may serve to support the upper bracket 140, which will be described later, from the lower surface. For example, the supporting flange 130 may be formed in a plurality of positions by bending upper ends of a left surface, a right surface and a rear surface of the second casing 110. A securing hole 131 for bolting fastening may be provided in each of the supporting flanges 130.

A bottom surface of the upper bracket 40 may be disposed on an upper surface of the supporting flange 130. The upper bracket 40 and the supporting flange 130 may be coupled to each other by a securing means such as a bracket securing bolt B1. Preferably, a left side end and a rear end of the first upper bracket 41 and a right side end and a rear end of the second upper bracket 42 may be supported and coupled to each other by the supporting flange 130. Here, the right side end of the first upper bracket 41 and the left side end of the second upper bracket 42 may be supported by a supporting bracket 530 which will be described later.

Meanwhile, the cover plate 20 may be coupled to an upper end of the case 10 and a heating target may be placed on the upper surface of the cover plate 20. The cover plate may be configured to close the open top of the case 10 to protect the internal components of the case 10.

The heating target may be put on the upper surface of the cover plate 20 and a magnetic field generated from the heating portion 30 may pass through the cover plate to reach the heating target. For example, the cover plate 20 may be made of a material having excellent heat resistance such as ceramic or tempered glass, but it is not limited thereto.

An input interface (not shown) configured to receive an operation input from the user may be provided on the upper surface of the cover plate 20. The input interface may be disposed on a predetermined area of the upper surface of the cover plate 20 and display a specific image.

The input interface may receive a touch input from the user and the electric range 1 may be operated based on the received touch input.

For example, the input interface may be a module configured to input a desired heating intensity or heating time by a user, and may be implemented as a physical button or a touch panel.

A touch circuit board module 85 configured to receive a user's touch manipulation input may be provided under the input interface, that is, under the cover plate 20. The touch circuit board module 85 may include a plurality of key switches 851 and a touch circuit board 851 on which and the plurality of key switches 851 are mounted. The user can input a command to the touch circuit board module 85 via the key switches 851 to control the operation of the electric range 1.

In the electric range 1 according to an embodiment of the present disclosure, an upper surface of the touch circuit board module 85 may be in close contact with a lower surface of the cover plate 20. At this time, the touch circuit board module 85 may be disposed at a position corresponding to the input interface.

The touch circuit board module 85 and the input interface may be connected to each other by a capacitive touch input method. Accordingly, when the user inputs a control command to the input interface, the control command may be input to the touch circuit board module 85.

In addition, a display may be provided on a predetermined area of the upper surface of the cover plate 20 and configured to display an operation state of the electric range 1.

A light display region may be formed on the upper surface of the cover plate 20. An LED substrate module 84 may be disposed under the cover plate 20, corresponding to the light display region. The light irradiated from the LED substrate module 84 may be transmitted to the user via the light display region. For example, the LED substrate module 84 may be fixedly disposed on an upper bracket 40 which will be described later. The upper bracket 40 may include a plurality of substrate supporting portions 417 and 427 to support the LED substrate module 84.

At this time, the light display region and the LED substrate module 85 may be disposed in positions corresponding to each other. When a plurality of LED substrate modules 84 are provided, the same number of light display regions may be disposed on the upper surface of the cover plate 20.

Meanwhile, the electric range 1 according to one embodiment of the present disclosure may further include a cover bracket 70 configured to support the cover plate 20 and connect the cover plate 20 to the case 10.

As shown in FIG. 1, the cover bracket 70 may be disposed on the outside of the upper bracket 40 and the case, and may be coupled to the case 10, to support the cover plate 20. For example, the cover bracket 70 may be coupled to the case by a securing means such as the case securing bolt (not shown).

A plurality of cover brackets 70 may be provided and each of the cover brackets 70 may be disposed on a position corresponding to each side of the cover plate 20 formed in a quadrangle. As one example, a total of fourth cover brackets 70 may be disposed on respective sides of the rectangular cover plate 20.

Meanwhile, the heating portion 30 may be provided in plural and disposed under the cover plate 20, to heat a heating target.

A total of three heating portions 30 are shown in the accompanying drawings.

The plurality of heating portions 30 may be all provided in the induction heating method, or some of the heating portions 30 may be provided a device using the induction heating method and the other ones thereof may be a highlight heating device using an electric resistance heating method, so that the electric range 1 may be configured as a so-called hybrid range.

Hereinafter, the electric range 1 including the plurality of heating portions 30 all provided in the induction heating method will be described.

In this instance, the plurality of heating portions 30 may be configured to have the same heating capacity or different heating capacities from each other.

The accompanying drawings show an example of the plurality of heating portions including a first heating portion 31, a second heating portion 32 and a third heating portion 33, and the present disclosure may not be limited thereto. The example configured of the first heating portion 31, the second heating portion 32 and the third heating portion 33 that have different heating generation capacities will be described as a standard.

The first heating portion 31 may be secured to the first upper bracket 41. The second heating portion 32 and the third heating portion 33 may be secured to the second upper bracket 42.

The heating portions 31, 32 and 33 may include core frames 311, 322, 332, respectively, in common. The working coils 312, 322 and 332 may be spirally wound around upper surfaces of the core frames 311, 321, 331, respectively, and ferrite cores 313, 323 and 333 may be mounted on lower surface of the core frames 311, 321 and 331, respectively. Accordingly, when high-frequency power is applied to the working coils 312, 322 and 332, a magnetic field may be formed around the ferrite core 313, 323 and 333, and an eddy current may be formed in a heating target by the formed magnetic field.

Each of the working coils 312, 322 and 332 may include a pair of outgoing wires 312a, 322a and 332a, and an outgoing tip terminal may be provided at ends of each lead wire 312a, 322a and 332a.

A temperature sensing portion 60 may be provided in the center of each heating portion 31, 32 and 33. More specifically, a first temperature sensing portion 61 may be provided in the first heating portion 31 and a second temperature sensing portion 62 may be provided in the second heating portion 32. A third temperature sensing portion 63 may be provided in the third heating portion 33.

At this time, the first temperature sensing portion 61 may include a first plate temperature sensor 611 configured to sense the temperature of the cover plate 20 directly above the first heating portion 31, a first thermal fuse (not shown) configured to detect whether the temperature of the cover plate 20 increases above a preset threshold temperature, a first coil temperature sensor 612 configured to sense the temperature of the first working coil 312, and a first sensor holder 614 in which the first plate temperature sensor 611 and the third thermal fuse (not shown) are mounted.

Similarly, the second temperature sensing portion 62 and the third temperature sensing portion 63 may have substantially the same configuration as the first temperature sensing portion 61, respectively. The second temperature sensing portion 62 may include a second plate temperature sensor, a second coil temperature sensor, a second thermal fuse and a second sensor holder. The third temperature sensing portion 63 may include a third plate temperature sensor, a third coil temperature sensor, a third thermal fuse and a third sensor holder.

The first to third plate sensors may be configured to directly contact the lower surface of the cover plate 20 so as to measure the temperature of the cover plate 20. The sensing surfaces may be disposed to maintain a contact state with the lower surface of the cover plate 20 at all times.

The first to third coil temperature sensors may be disposed on the lower surfaces of the working coils 312, 322 and 332, and may directly contact the working coils 312, 322 and 332 so as to measure the temperature of the working coils 312, 322 and 332. The sensing surfaces may be disposed to maintain a contact state with the working coils 312, 322 and 332 at all times.

The first to third fuses may serve as a kind of a thermostat configured to disconnect an internal circuit when the temperature of the cover plate 20 increases above a preset threshold temperature. When internal circuits of the first to third thermal fuses are cut off, the power supplied to the working coils 312, 322 and 332 may be immediately cut off to discontinue the operation of the heating portions 31, 32 and 33 in which overheating occurs.

Meanwhile, those heating portions 31, 32 and 33 may be disposed on and supported by the upper bracket 40. As in an example shown in the drawing, the upper bracket 40 may be provided in plurality. Preferably, the upper bracket 50 may include a first upper bracket 41 supporting the first heating portion 31 and a second upper bracket 42 supporting the second heating portion 32 and the third heating portion 33.

The upper bracket 40 may be made of a lightweight metal material (e.g., aluminum), and the present disclosure may not be limited thereto.

The first upper bracket 41 may include a first upper plate 411 and a second upper plate 412. The first upper plate 411 may define a bottom surface of the first upper bracket 41 and the first heating portion 31 may be mounted on the first upper plate 411.

Likewise, the second upper bracket 42 may include a first upper plate 421 and a second upper plate 422. The first upper plate 421 may define a bottom surface of the second upper bracket 42, and the second heating portion 32 and the third heating portion 33 may be mounted on the first upper plate 421.

The first upper plate 411 of the first upper bracket 41 and the first upper plate 421 of the second upper bracket 42 may completely cover a main circuit board module 83 and a power circuit board module 83 provided under the firs upper plate in the vertical direction (U-D direction).

Due to this structure, the first upper plate 411 of the first upper bracket 411 and the first upper plate 421 of the second upper bracket 42 may serve to shield the electromagnetic field and electromagnetic waves generated from the heating portion 30 from reaching elements mounted on the main circuit board module 81 and the power circuit board module 83.

Specifically, the first upper bracket 41 and the second upper bracket 42 may be configured to improve electromagnetic compatibility (EMC) and electromagnetic interference (EMI) performance of the printed circuit board 51.

The second upper plate 412 of the first upper bracket 41 and the second upper plate 422 of the second upper bracket 422 may be bent from respective first upper plates 411 and 421 in the vertical direction (U-D direction) of the electric range 1.

As shown in the drawing, the second upper plates 412 and 422 may be formed in sides of the first upper plates 411 and 421 formed in a substantially quadrangular shape.

The rigidity of the first upper bracket 41 and the second upper bracket 42 may be reinforced as a whole by the second upper plates 412 and 422. That is, the second upper plates 412 and 422 may suppress the plate-shaped first upper plates 411 and 421 from being bent or damaged by the weight of the internal components including the heating portion 30 or an external force.

Meanwhile, each of the first upper plates 411 and 421 may include the pair of outgoing wires 312a, 322a and 332a mentioned above, and a plurality of insertion holes penetrated by lead wires (not shown) of the temperature sensing portion 60 to be extended. For example, the plurality of insertion holes may include a first insertion hole 414 and 424 through which one of the pair of the outgoing wires 312a and 322a and 332a passes, and a second insertion hole 415 and 425 through which the other one of the outgoing wires passes, and a third insertion hole 416 and 426 through which the lead wire of the temperature sensing portion 60 passes.

The pair of lead wires 312a and 322a and 332a and the lead wire of the temperature sensing portion 60 may pass through the insertion holes and extended in the downward direction (D-direction), thereby electrically connected to the control circuit board module 80.

In addition, the first upper plate 411 and 421 may include a plurality of forming portions protruded in the upward direction (U-direction) or the downward direction (D-direction).

The forming portion protruded in the downward direction (D-direction) may be referred to as an anti-pressing forming portion 411a and 421a. The anti-pressing forming portion may serve to prevent the lead wires 312a, 322a extended outward in a radial direction (r-direction_ from the center of each heating portion 31, 32 and 33 among the pair of lead wires 312a, 322a and 332a from being pressed in the mounting process of the heating portions 31, 32 and 33. Specifically, the anti-pressing forming portion 411a and 421a may serve as a passage for the outgoing wire 312a, 322 and 332a extended outward from the center of the heating portion 31, 32 and 33.

The forming portion protruded in the upward direction (U-direction) may be referred to as a securing forming portion 413. At the same time, it may support the heating portion 31, 32 and 33, and may prevent the securing means such as bolts from being extended in the downward direction (D-direction) after passing through the first upper plate 411 and 421. In other words, the securing forming portion 413 may provide a margin for preventing the securing means (e.g., bolts) from interfering with the control board circuit module 80 disposed in the downward direction (D-direction).

A LED substrate module 84 may be disposed on each of the first upper bracket 41 and the second upper bracket 42. Substrate support portions 417 and 427 for supporting the LED substrate module 84 may be formed in the first upper plate 411 of the first upper bracket 41 and the first upper plate 421 of the second upper bracket 421, respectively. The substrate supporting portions 417 and 427 may be formed by partially cutting-away the first upper plate 411 of the first upper bracket 41 and the first upper plate 421 of the second upper bracket 42.

In the example shown in the drawing, one substrate supporting portion 417 may be provided in the first upper bracket 41 on which the first heating portion 31 is disposed. Two substrate supporting portions 427 may be formed in the first upper bracket 41 on which the second heating portion and the third heating portion are disposed.

A plurality of LEDs may be aligned on the LED substrate module 84. The plurality of LEDs may be luminescent when the heating portion 30 is turned on so that the user may be visually informed of whether the heating portion 30 is in operation or an operation state.

The LED substrate module 84 may change the luminescent shape, color, etc. of the plurality of LEDs to inform the user whether or not the electric range 1 is operating and the operation state.

The base bracket 50 may be disposed under the first upper bracket 41. A main circuit board module 81, a power circuit board module 83 that consists the control circuit board module 80 may be mounted on the base bracket 50. The base bracket 50 may be configured to support the main circuit board module 81, the power circuit board module 83 and the ventilation module 90.

The upward forming portions 114 formed in the first casing 110 may support the lower surface of the base bracket 50 at a plurality of positions.

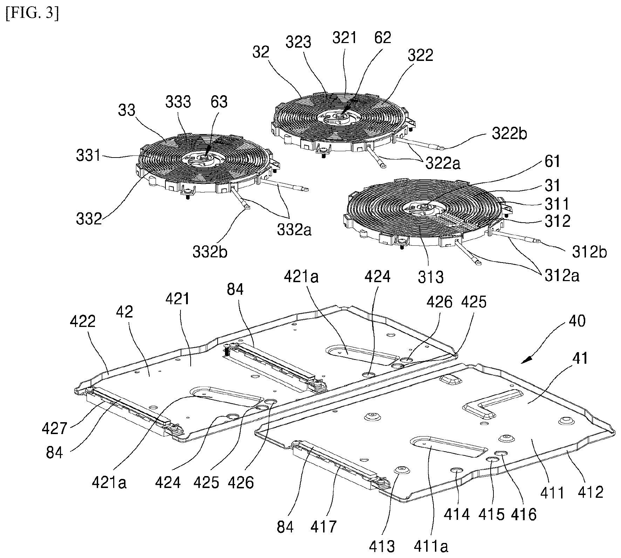

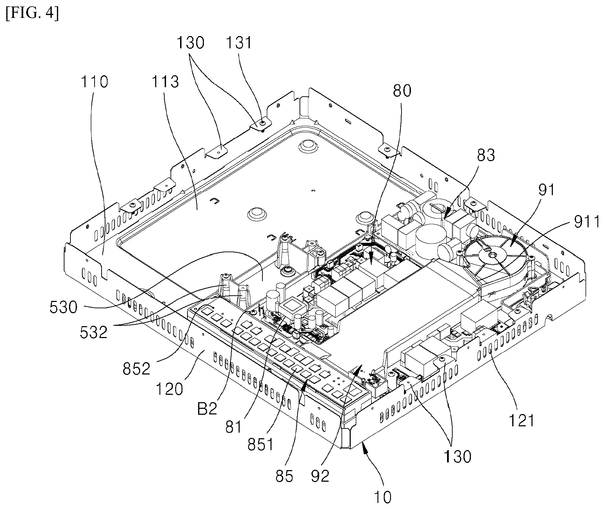

As shown in FIGS. 3 and 4, the base bracket 50 may include a substrate bracket 51 including a bottom plate 510 and a lateral plate 520.

The bottom plate 510 may define a bottom surface of the base bracket 50. The main circuit board module 81, the power circuit board module 83 and the ventilation module 90 may be mounted on an upper surface of the bottom plate 510.

Substrates 811 and 831 provided in the main circuit board module 81 and the power circuit board module 83 may be secured to the bottom plate 510 via a plurality of substrate fastening bolts B2. The substrate fastening bolt B2 may be extended to the upward forming portion 114 of the first casing 110 to be screw-fastened. The substrates 811 and 831 of the main substrate module 81 and the power circuit module 83 and the bottom plate 510 may be secured to the upward forming portion 114 of the first casing 110 by using the substrate fastening bolt B2 at the same time.

Furthermore, any one of the substrate fastening bolts B2 may be configured to act as grounding means for grounding the main circuit board module 81 and the power circuit board module 83. For example, as shown in FG. 4, a copper-foil-shaped ground terminal 817 may be formed around a bolt hole 816 of the main circuit board module 81 through which the board securing bolt is extended, and a head of the substrate fastening bolt may be electrically connected to the ground terminal 817. A stem portion of the board securing bolt may be physically and electrically connected to the upward forming portion 114 of the first casing 110. Through such a simple configuration, the main circuit board module 81 may be effectively grounded to the first casing 110 by the board securing bolt. Although not shown, the same type of a ground terminal (not shown) may be provided in any one of the plurality of bolt holes 833 formed in the power circuit board 831.

Meanwhile, the lateral plate 520 may be extended in the upward direction (U-direction) of the electric range 1 from a lateral surface edge of the bottom plate 510.

The lateral plate 520 may serve to reinforce the rigidity of the entire base bracket 50. That is, the lateral plate 520 may suppress the plate-shaped bottom plate 510 from being bent or damaged by the weight of the internal components (e.g., the circuit board) or the external force. Further, the lateral plate 520 may also serve to protect the main circuit board module 81, the power circuit board module 83 and the ventilation module 90 from the external force applied to the bottom plate 510 in the lateral direction or front-rear direction (F-R direction). For that, the lateral plate 520 may be protruded to a position higher than a position in the vertical direction (U-D direction) of at least the main circuit board 811 and the power circuit board 831.

Meanwhile, a supporting bracket 530 configured to support the first upper bracket 41 and the second upper bracket described above may be provided in a position corresponding to the center of the electric range 1.

The supporting bracket 530 may be provided parallel to the lateral surface of the substrate bracket 51 and the right surface with respect to the drawing. Preferably, the supporting bracket 530 may be integrally formed with the substrate bracket 51. At this time, the supporting bracket 530 may be integrally formed with the substrate bracket 51, but may be configured to be easily decoupled from each other by an external force. For example, a connection portion between the supporting bracket 530 and the substrate bracket 51 may have a relatively weak strength.

The supporting bracket 531 may include a plurality of supporting bosses 531 extended in the upward direction (U-D direction) from a bottom surface a first upper bracket toward the first upper bracket 41 and the second upper bracket 42 described above.

As mentioned above, left and rear ends of the first upper bracket 41 and right and rear ends of the second upper bracket 42 may be supported by and coupled to the supporting flanges 130.

The right end of the first upper bracket 41 and the left end of the second upper bracket 42 may be supported and secured by the supporting bosses 531 of the supporting bracket 530. To couple the right end of the first upper bracket 41 and the left end of the second upper bracket 42 to each other, a coupling hole 532 may be formed in an upper end of each supporting boss 531.

In the example shown in the drawing, a total of five supporting bosses 531 may be provided in the supporting bracket 530. Not all of the five supporting bosses 531 may be used in coupling the right end of the first upper bracket 41 and the left end of the second upper bracket 42. For example, only three supporting bosses 531 out of the five supporting bosses 531 may participate in the coupling between the first upper bracket 41 and the second upper bracket 42.

The other supporting bosses 531 not used in the coupling according to the illustrated example may be used when the supporting bracket 530 supports the first upper bracket 41 and the second upper bracket 42 at a different position in another example. Specifically, when applied to another example of an electric range having a larger size than the electric range described above, the supporting bracket 530 may be decoupled from the substrate bracket 51 and moved to another position to be used. When the supporting bracket 530 is applied to the larger-sized electric range, the other supporting bosses 531 not used in the coupling in this example may be used.

The supporting bracket 530 is configured to be applicable to other examples, thereby facilitating the parts sharing and reducing manufacturing cost.

As described above, the main circuit board module 81 and the power circuit board module 83 that constitute the control circuit board module 80 may be mounted on the base bracket 50. Although not limited thereto, the control circuit board module 80 can be understood as a higher concept including the above-noted LED substrate module 84, the touch circuit board module 85 and the wireless communication substrate module 86 rather than the main circuit board module 81 and the power circuit board module 83.

As shown in FIGS. 3 and 4, the main circuit board module 81 may include a controller configured to the overall operation of the electric range 1, and may be electrically connected to the touch circuit board module 85 and the LED substrate module 84 described above.

Accordingly, the main circuit board module 81 may receive a user' manipulation through the touch circuit board module 85 or a user's manipulation through the wireless communication board module 86 wirelessly or wiredly. The main circuit board module 81 may transmit operational information and status information to the LED substrate module 84 and a user's mobile terminal (not shown).

In addition, on the center of the main circuit board 811 may be mounted a CPU provided as a controller (i.e., a microcontroller, a microcomputer or a microprocessor), a plurality of switching elements 812 configured to convert the power received from the power circuit board module 83 into high-frequency power and supply the converted power to the working coils 312, 322 and 332, and a bridge circuit element 813. The plurality of switching elements 812 may serve as a power converting module.

A plurality of insulated gate bipolar transistors (IGBT) may be applied as the switching elements. However, the IGBT type switching element 812 is a very heat-generating component. If such generated heat is not maintained at an appropriate level, the life span of the switch element 812 will be shortened or a malfunction of the switch element is highly likely to occur.

As a means for cooling the switching element 812, a heat sink 814 configured to absorb heat generated in the plurality of switching elements 812 and the bridge circuit element 813 may be mounted on the main circuit board 811.

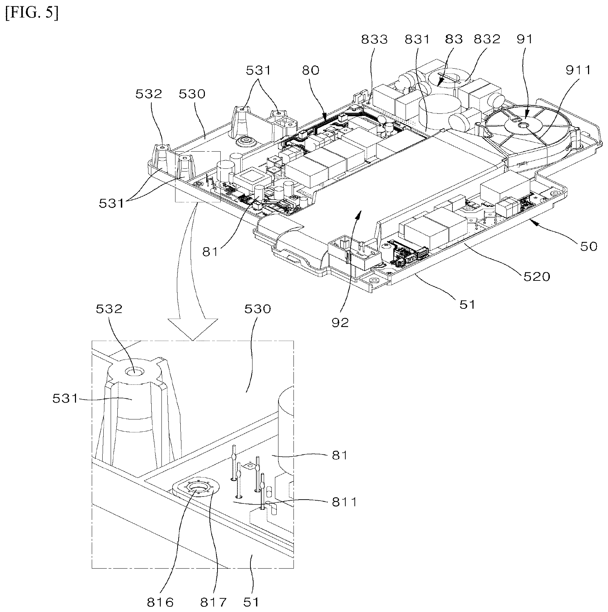

As shown in FIG. 5, the heat sink 814 may include a hexahedral main body 8141 extended along the front-rear direction (F-R direction) of the electric range 1, and a plurality of heat dissipation fins 8143 extended toward the main circuit board 811 from a lower surface of the body 8141.

An upper surface of the main body 8141 may be formed in a plane parallel to the main circuit board 811, and both lateral surfaces of the main body 8141 may be formed as inclined surfaces having a downward inclination.

The switching elements 812 and the bridge circuit element 813 may be attached to the both lateral surfaces having the downward inclination. Accordingly, the heat generated by the switching element 812 and the bridge circuit element 813 may be conducted through both lateral surfaces of the main body 8141.

Meanwhile, a flow channel 8142 may be provided in the main body 8141, and extended in a straight line through front and rear surfaces of the main body 8141. The air may flow along the airflow channel 8142 to a ventilation fan-motor assembly 91 which will be described later. The heat from the switching elements 812 and the bridge circuit element 813 to be conducted may be partially absorbed to the air flow inside the airflow channel 8142.

Meanwhile, concavities and convexities (or unevennesses) may be formed on an inner surface of the airflow channel 8142 and an upper surface of the main body 8141 to expand the contact area for the air flow. The unevenness may be extended in a straight line along the air flow direction, that is, in the front-rear (F-R direction) to minimize the flow resistance.

The plurality of heat dissipation fins 8143 may be protruded from the lower surface of the main body 8141 and extended in the straight line, spaced a constant distance apart from each other. Accordingly, an air passage may be formed between each two neighboring heat dissipation fins adjacent to each other.

Some of the heat dissipation fins, in particular, the ones disposed adjacent to both lateral sides of the lower surface of the main circuit board 811 may directly contact the main circuit board 811. The ones of the heat dissipation fins may serve to support the heat sink 814 as a whole.

In a state where the plurality of switching elements 812 and the bridge circuit element 813 are attached to the heat sink 814, the heat sink 814 may be covered by an air guide 92 which will be described later.

The heat sink 814 may be spatially separated from other circuit elements outside the air guide 92 by the air guide constituting a ventilation module 90, and a cooling passage only for the heat sink may be formed by the air guide 92.

As shown in the drawing, a plurality of filter elements 815 may be disposed in a periphery of the air guide 92 to remove noise included in power output from the power circuit board module 83, which will be described later.

The power circuit board module 83 may be disposed behind the main circuit board module 81. In general, the power circuit board module 83 may be modularized by mounting a high voltage device known as a switching mode power supply (SMPS) on the power circuit board 831. The power circuit board module 83 may convert external power into a stable-stated power before it is supplied to the switching elements 812.

A ventilation fan-motor assembly 91 constituting the ventilation module 90 may be disposed behind the main circuit board module 81, preferably, on the base bracket 50 disposed behind of the heat sink 814.

The ventilation fan-motor assembly 91 may be configured to absorb external air drawn via the air inlet hole 112 of the above-mentioned first casing 110 and the through-hole 511 of the base bracket 50, and blow the air into the air guide 92.

As shown in the drawings, a ventilation fan applied to the ventilation fan-motor assembly 91 may have no limitations, but a sirocco fan may be preferable in consideration of location and spatial restrictions in which the ventilation fan is mounted. When the sirocco fan is applied, external air may be absorbed in from a bottom of the sirocco fan in a direction parallel to a rotation shaft, and the air may be accelerated and discharged radially outward.

To improve air ventilation efficiency, an outlet end 911 of the ventilation fan may be directly connected to an inlet of the air guide 92, and external air forcedly flown by the ventilation fan may be drawn into the air guide as a whole.

The air guide 92 may include a guide body 921 having a U-shaped cross-section and formed in a box shape in which a lower surface is open as a whole.

The heat sink 814 may be mounted in an internal U-shaped space and the cooling passage dedicated to the heat sink 814 may be formed to blow the external air blown through the above-mentioned ventilation fan.

The guide body 921 may be disposed to correspond to the shape in which the heat sink 814 is disposed. When it is extended along the front-rear direction (F-R direction) of the electric range 1 as shown in FIG. 5, the heat sink 815 may be correspondingly arranged in a shape extended along the front-rear direction (F-R direction) of the electric range.

The rear surface of the guide body 921 may be partially open and the open rear surface may serve as an air introduction hole 922 for introducing the external air blown by the ventilation fan.

Unlike the rear surface, a front surface and a lateral surface of the guide body 921 may be completely closed, and may perform a function of a partition wall configured to prevent the introduced external air from leaking to the outside.

The external air introduced into the cooling passage formed in the guide body 921 may flow forward while performing heat-exchange with the heat sink 814, and the flow direction of the external air may be guided by the guide body 921 to finally flow in the downward direction (D-direction), thereby finally being discharged to the outside through the air outlet hole 111 of the first casing 110.

Meanwhile, a substrate mounting portion 923 may be integrally formed with a front surface of the guide body 921, preferably, a front left area of the front surface. The substrate mounting portion 923 may be protruded from the front left area in the upward direction.

The substrate mounting portion 923 may accommodate the above-mentioned wireless communication substrate module 86. The position of the substrate mounting portion 923 may be determined as a position which can minimize the influence of high-frequency noise generated by the heating portion 30 and the switching elements 812. The position that is the most distant from the heating portion 30 and the switching elements 812 may be selected.

### [Detailed configuration of Heating portion]

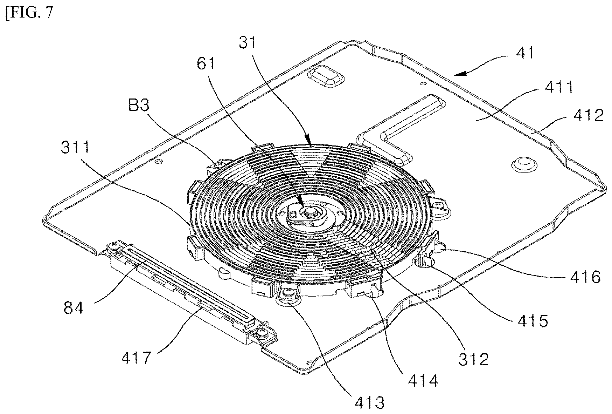

Hereinafter, referring to FIG. 7 or more, detailed configuration of the heating portion 30 provided in the electric range 1 according to one embodiment will be described.

However, in FIG. 7 or more, the first heating portion 31 among the first to third heating portions 31, 32 and 33 will be exemplarily described with reference. Unless otherwise described below, the configuration of the first heating unit 31 is similarly applicable to the second heating portion 32 and the third heating portion 33, and description of overlapping contents will be omitted.

First, referring to FIGS. 7 to 9, the first heating portion may include a working coil 312, a core frame 311 and a ferrite core 313.

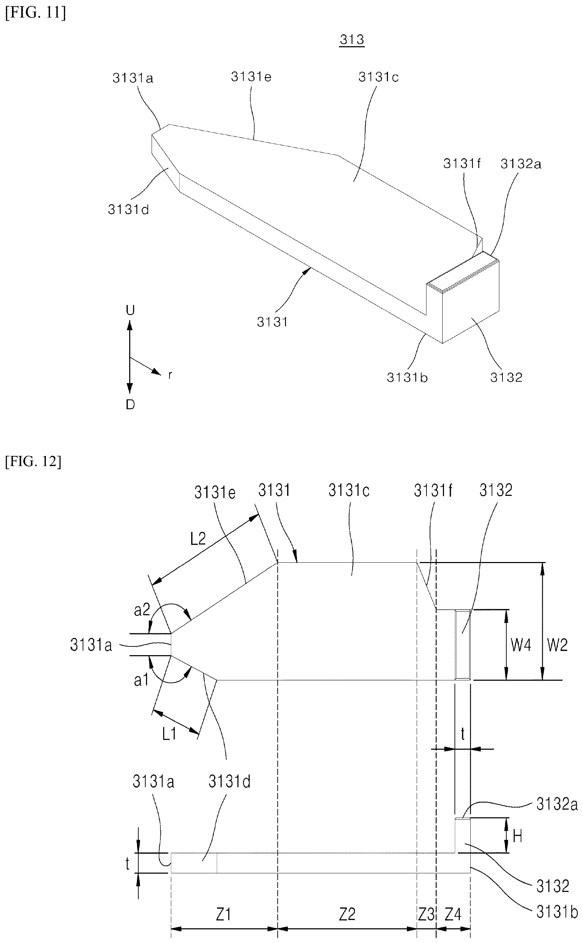

In FIGG. 7 to 10, in order to clearly explain the structure of the first heating portion 31, the working coil 312 is omitted. However, since the first heating portion 31 on which the working coil 312 is wound is shown in other drawings (e.g., FIG. 12 and FIG. 13), there will be no difficulty in understanding the present disclosure.

As shown in the drawings, the core frame 31 may be formed in a hollow cylindrical shape with an empty interior as a whole, and a lower surface thereof may be entirely open.

The working coil 312 may be spirally wound on an upper surface of the disk portion 3111 constituting the upper surface of the core frame 311. To allow the working coil 312 to be wound in the radial direction, a guide rail 3113 may be provided on the upper surface of the disk portion 3111. The guide rail 3113 may be extended in a spiral shape while proceeding from a radial outer side of the disk portion 3111 toward a radial (r-direction) inner side of the disk portion 3111.

The guide rail 3113 may be formed to have a predetermined height in the upward direction (U-direction) from the upper surface of the disk portion 3111, and a radial track 3113a may be formed between neighboring guide rails 3113 to accommodate the working coil 312.

The protruded height of the guide rail 3113 may be larger than a diameter of the working coil 312 not to expose the working coil 312 upward (D-direction). When the working coil is wound a plurality of times in multiple layers, the height of the guide rail 3113 may be formed to be equal to the number of layers of the working coil 312.

An upper end of the guide rail 3113 may be in direct contact with a lower surface of the above-described cover plate 20 to support the load of a heating target which will be placed on an upper surface of the cover plate 20.

Meanwhile, the disk portion 3111 of the core frame 311 may include a through hole 3113c formed therethrough in the vertical direction (U-D direction). The through hole 3113c may penetrate even the guide rail 3113. That is, the through hole 3113 may facilitate the communication between the inside and the outside of the core frame 311.

The through hole 3113c may be formed between core accommodation portions 3113b which will be described later. Specifically, the disk portion 3111 formed between the neighboring core accommodation portions 3113b and the ferrite core 313 and the guide rail 3113 may be at least partially opened in the vertical direction (U-D direction) by the through hole 3113c.

FIGS. 7 to 10 exemplarily show an embodiment in which a total of eight core accommodation portions 3113b and the ferrite core 313 are provided, with a total of corresponding eight through holes 3113c. The present disclosure is not limited thereto, but will be described based on the embodiment in which a total of eight through holes are provided.

As shown in the drawings, each through hole 3113c may provided in a polygonal shape that gradually increases in width while proceeding outward in the radial direction (r-direction). As one example, the through hole 3113c may be provided in a sector shape. Such the shape of the through-shape 3113c may be selected as a shape avoiding the ferrite core 313 and the shape of the core accommodation portion 3113b which will be described later. At this time, the through hole 3113c may be formed as close as possible to an edge wall 3112 of the core frame 311 which will be described later, so that the area of the each through hole 3113c can be secured to the maximum.

As described above, the inside and the outside of the core frame 311 may be in communication by the through hole 3113c. Accordingly, the through hole 3113c may function as a passage through which the heat transferred from the cover plate 20 and the heat generated from the working coil 312 can escape to the outside without being trapped inside the core frame 311.

Meanwhile, a cable guide wall 3116 protruded in the downward direction (D-direction) along the circumference of the through hole may be provided at a lower surface of the disk portion 3111 of the core frame 311. The cable guide wall 3116 may separately guide the lead wires of the first plate temperature sensor 611 extended toward the outside of the core frame 311 and the outgoing wire of the working coil 312, and may function as an extension passage thereof. The extension passages of the lead wires and outgoing wires may be defined together by the cable guide wall 3116 and the accommodation wall of the core accommodation portion 3113b.

Meanwhile, the working coil 312 wound spirally around the guide rail 3113 and configured to generate a magnetic field using high-frequency power may be made of Ritz wire with excellent durability, as one example, but the present disclosure is not limited thereto.

In the center of the disk portion 3111 provided in the core frame 311 may be formed a circular region in which the guide rail 3113 is not formed, in other words, the working coil 312 is not wound.

A coupling hole 3111a may be formed in the center of the circular region, with passing through the disk portion 3111 in the vertical direction (U-D direction).

The first sensor holder 614 may be coupled to the coupling hole 3111a. As described above, the first plate temperature sensor 611 and the first thermal fuse 6142 that constitute the first temperature sensing portion 61 may be disposed in the first sensor holder 6141.

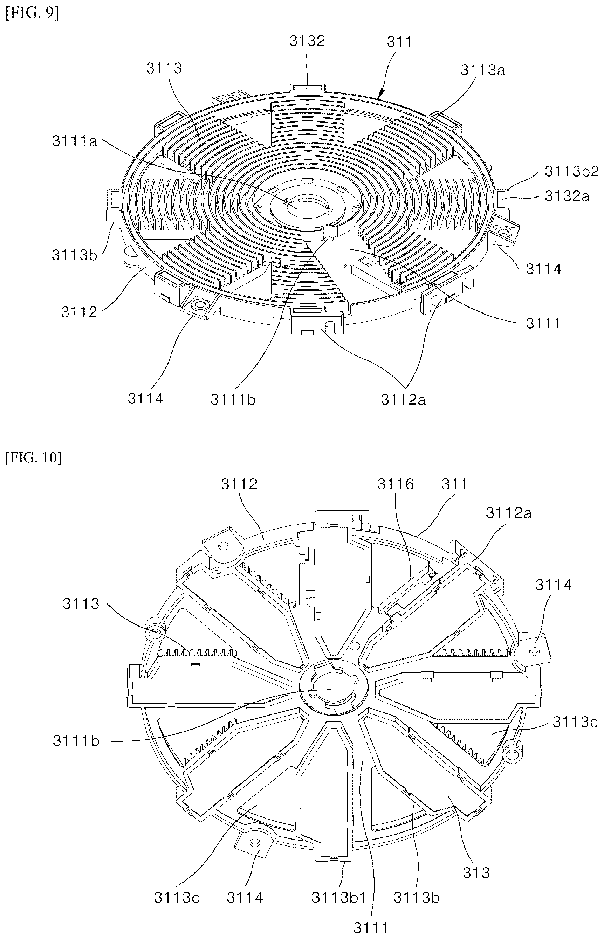

As shown in FIG. 9, the first sensor holder 614 may include a first holder 6141 configured to hold the first plate temperature sensor and a second holder configured to hold the first thermal fuse 6142.

The first holder 6141 may be formed in a hollow cylindrical shape and the second holder may be formed in a box shape coupled to a lateral surface of the first holder 6141. The first holder 6141 and the second holder may be integrally formed with each other and made of a material having a predetermined elasticity or a material having heat resistance suitable for a high-temperature environment so as to elastically support the first plate temperature sensor 611 and the first thermal fuse 6142.

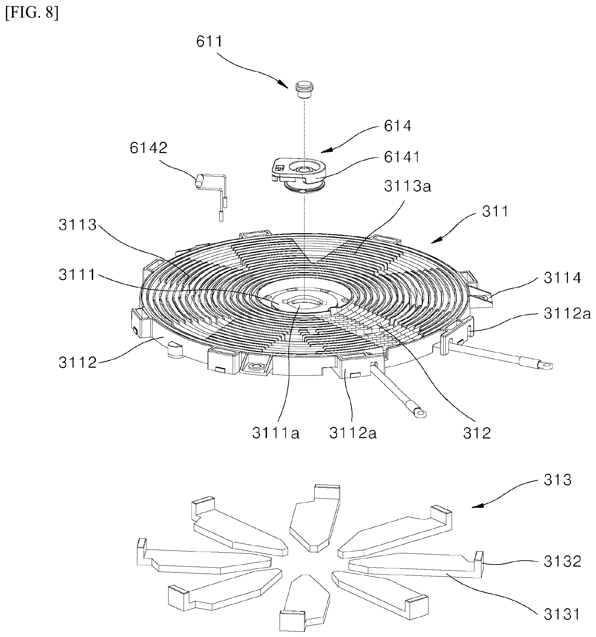

As shown in FIG. 8, a lower end of the first holder 6141 may partially pass through the coupling hole 3111a in the installation process of the first holder 6141 in the coupling hole 311a, and may be exposed to the lower surface of the disk portion 3111.

The first plate temperature sensor 611 coupled to the central inner surface of the first holder 6141 may be configured to sense the temperature of the lower surface of the cover plate 20. Preferably, the first plate temperature sensor 611 may be in direct contact with the lower surface of the cover plate 20 to sense the temperature of the cover plate 20.

To this end, a sensing surface formed on the upper end of the first plate temperature sensor 611 may be protruded in the upward direction (D-direction) to directly contact the lower surface of the cover plate 20.

The lead wire (not shown) of the first plate temperature sensor 611 may have one end connected to the lower end of the first plate temperature sensor 611 and the other end electrically connected to the control circuit board module 80 after passing through the cable holder 3112a formed in the edge wall 3112 of the core frame 311.

The first thermal fuse 6142 disposed in the second holder may serve as a safety device configured to open a circuit when the temperature of the cover plate 20 exceeds a predetermined threshold temperature, that is, when overheating occurs.

The first thermal fuse 6142 may be classified into a recovery type that automatically returns to the original state when the temperature falls below a predetermined value after the circuit is open due to occurrence of overheating occurs, and a non-recovery type that does not return to the original state. The first thermal fuse 6142 applied to this embodiment may be the recovery type.

Similar to the first plate temperature sensor 611, the pair of lead wires (not shown) provided in the first thermal fuse 6142 may be electrically connected to the control circuit board module 80 after penetrating the cable holder 3112a formed in the edge wall 3112 of the core frame 311.

At the inner end of the guide rail 3113, which is the point at which the guide rail ends inside, may be formed a coil hole 3111b to guide the one end of the working coil 312 or the outgoing wire of the working coil 312 in the downward direction (D-direction).

As shown in FIG. 8, the plurality of ferrite cores 313 may be disposed on a lower surface of the disk portion 3111 provided in the core frame 311.

The core accommodating portions 3113b may be radially disposed on the lower surface of the core frame 311.

As shown in the drawings, the core accommodating portion 3113b may have a polygonal box shape with an entirely open lower surface. Each of the core accommodating portions 3113b may be defined by an accommodating wall protruded in the downward direction (D-direction) from the lower surface of the disk portion 3111 of the core frame 311.

The ferrite core 313 having the same shape as the inner shape of the core accommodating portion 3113b may be accommodated in reach core accommodating portion 3113b. Accordingly, the number of core accommodating portions 3113b may be the same as the number of ferrite cores 313.

The core accommodating portion 3113b may be formed so that the plurality of ferrite cores 313 disposed radially may be spaced a predetermined distance apart from each other in the circumferential direction of the core frame 311. An inner end of each core accommodating portion 3113b and an inner end of each ferrite core 313 may be formed to gradually decrease in width while proceeding in the inward direction to secure such a distance.

A radial (r-direction) outer end 3113b1 of the core accommodation portion 3113b may be protruded to the outside of the edge wall 3112. As will be described later, the radial (r-direction) outer end 3131b and the extended bent portion 3132 of the ferrite core 313 may be extended outward in the radial direction (r-direction) over the edge wall 3112, in order to increase the volume of the ferrite core 313. To accommodate the radial (r-direction) outer end 3131b and the extended bent portion 3132 of the ferrite 313, the radial (r-direction) outer end 3113b1 of the core accommodation portion 3113b may be protruded outward in the radial direction of the edge wall 3112.

In addition, an exposure hole 3113b2 opened toward the upper direction (U-direction) may be provided on an upper surface 3131c of the outer end 3113b1 of the core accommodation portion 3113b. As one example, the exposure hole 3113b2 may have a shape corresponding to the shape of the upper surface 3132a of the extended bent portion 3132, and may be a rectangular open hole. The exposure hole 3113b2 may be configured to expose the upper end 3132a of the extended bent portion 3132 to the outside at least partially. Accordingly, the height H of the extended bent portion 3132 may be secured as much as possible as will be described in detail later, and it may be possible to easily check whether the extended bent portion 3132 and the ferrite core 313 are accurately placed in the correct positions. A chamfer may be formed on an edge of the upper surface 3132a of the extended bent portion 3132 to facilitate entry of the upper end of the extended bent portion 3132 when assembling the ferrite core 313.

The configuration related to the specific shape of the ferrite core 313 including the extended bent portion 3132 will be described later with reference to FIGS. 11 and 12.

Meanwhile, a downward (D-direction) end of the core accommodation portion 3113b may be in direct contact with the first upper plate 411 of the above-described first upper bracket 41. Through this, the load of the heating target transmitted to the disk portion 3111 may be transmitted to the core accommodation portion 3113b along the guide rail 3113, and finally transmitted to the first upper plate 411 of the first upper bracket 41. In other words, the core accommodation portion 3113b may have a dual function of accommodating the ferrite core 313 and supporting an external load inside the core frame 311.

Meanwhile, the cylinder-shaped edge wall 3112 extended in the downward direction (D-direction) may be integrally formed with the radially (r-direction) outer end of the disk portion 3111 of the core frame 311.

The cylinder-shaped edge wall 3112 may be configured to define the internal space of the core frame 311 and it may be integrally formed with the disk portion 3111.

Meanwhile, a plurality of fastening tabs 3114 configured to fasten the core frame 311 to the first upper bracket 41 as described above may be provided on the outside of the edge wall 3112. Each fastening tab 3114 may have a fastening hole through which a fastening means (e.g., a heating portion fastening bolt B3) is extended.

In addition, the cable holder 3112a may be provided in the outside of the edge wall 3112, to guide the lead wire of the first plate temperature sensor 611, the lead wire of the first thermal fuse 6142, the outgoing wire of the working coil 312 and the like to be extended outside the core frame 311.

### [Detailed configuration of Ferrite core]

Referring to FIGS. 11 and 12, the ferrite core 313 provided in the electric range 1 according to one embodiment of the present disclosure will be described.

As shown in FIGS. 11 and 12, the ferrite core 313 may include a plate-shaped core body 3131 having an inner end 3131a directed toward the center of the core frame 311 and an outer end 3131b directed toward the radial (r-direction) outer surface of the core frame 311.

In this instance, the thickness t of the core body 3131 may be maintained constant while proceeding from the inner end 3131a to the outer end 3131b. Specifically, since there is a clear limit to the size, particularly the height, of the first heating portion and the core frame 311, the thickness of the ferrite core 313 affecting the height of the core frame 311 needs to be maintained below a predetermined level. To this end, the thickness t of the core body 3131 of the ferrite core 313 may be maintained constant as a whole.

However, the thickness t may be maintained constant, but in order to increase the volume, the ferrite core 313 may be formed to have an asymmetric shape based on the arrangement direction on the core frame 311, that is, the radial direction (r-direction) of the core frame 311 or the longitudinal direction of the ferrite core 311.

More specifically, as shown in FIG. 12, the core body 3131 may include a first region (Z1) of which the width is gradually expanded in a direction perpendicular to the radial direction (r-direction) while proceeding along the radial direction from the inner end 3131a of the core body 3131, and a second region Z2 continuously formed with respect to the first region Z1 and of which the width W2 is maintained constant in a direction perpendicular to the radial direction (r-direction).

The first region Z1 may have a shape having the width gradually expanded toward the outside in the radial direction (r-direction) to secure a distance between each two inner ends 3131a of the ferrite cores 313. In other words, the first region Z1 may have a sharp shape in which the width of the inner end 3131a is the smallest.

As one example, both lateral surfaces constituting the first region Z1 may be extended linearly. A first lateral surface 3131d and a second lateral surface 3131e that correspond to both lateral surfaces may have a predetermined expansion angle, and may be gradually spaced a predetermined distance apart from each other.

The first lateral surface 3131d may be extended to the second region Z2, with a first expansion angle a1 with respect to the radial direction (r-direction), and the second lateral surface 3131e may be extended to the second region Z2, with a second expansion angle a2 with respect to the radial direction (r-direction). Preferably, the first expansion angle a1 may be equal to or greater than the second expansion angle a2.

The length L2 of the second lateral surface 3131e may be greater than the length L1 of the first lateral surface 3131d so that the width of the firs region Z1 may be expanded in the asymmetrical form based on the radial direction (r-direction). Using the asymmetric form, the width of the second region Z2 in the direction perpendicular to the radial direction (r-direction) may be secured wider than in the prior art, and thus the volume of the ferrite core 313 may be secured larger.

Meanwhile, the second region Z2 may be a region having a constant width in a direction perpendicular to the radial direction (r-direction).

As described above, the through hole may be formed between neighboring ferrite cores 313. The reason that the width of the second region Z2 of the ferrite core 313 is maintained constant may be to locate the second region Z2 more outward than the first region Z1 and more inward than a fourth region Z4 in the radial direction (r-direction), and may be to secure the areas of the through holes formed on both sides of the second region Z2 in the circumferential direction as wide as possible. In other words, as the width W2 of the second region Z2 becomes larger, the area of the through hole may be inevitably reduced by that amount.

Meanwhile, as shown in FIG. 12, the core body 3131 may further include a third region Z3 continuously formed with the outer surface of the second region Z2 and having the width gradually reduced in a direction perpendicular to the radial direction (r-direction), and a fourth region Z4 continuously formed with respect to the third region Z3 and having the width maintained constant in the direction perpendicular to the radial direction (r-direction). The fourth region Z4 may be extended to the radially outer end 3131b of the core body 3131.

At this time, similar to the first region Z1, both lateral surfaces constituting the third region Z3 may be extended linearly. The both lateral surfaces of the third region Z3 may be spaced a predetermined distance from each other and the distance may be gradually reduced. As one example, one of the lateral surfaces 3131f may be extended to the fourth region Z4, with a predetermined reduction angle in the radial direction (r-direction).

As described above, the fourth region Z4 may be the area protruded outward in the radial direction (r-direction) after at least partially passing through the edge wall 3112 of the core frame 311. The width W4 of the fourth region Z4 in a direction perpendicular to the radial direction (r-direction) may be smaller than the width W2 of the second region Z2 so that the width of the protruded area can be minimized.

Meanwhile, the core body 3131 may further include an extended bent portion 3132 protruded upward (U-direction) from an upper surface of the core body 3131.

As one example, the extended bent portion 3132 may be formed in a shape of a quadrangular pole that is bent and extended vertically from the upper surface 3131c of the fourth region Z4. It is preferred that, the extended bent portion 3132 is integrally formed with the upper surface 3131c of the fourth region Z4.

At this time, the extended bent portion 3132 may be formed in an outer end of the core body 3131 to minimize interference to the working coil 312, and may be disposed at a position extended outward in the radial direction after passing the edge wall 3112 as a whole as mentioned above.

In this way, the volume of the ferrite core 313 may be additionally secured by additionally providing the extended bent portion 3132 extended upward.

Meanwhile, to secure the maximum volume of the extended bent portion 3132, the width of the extended bent portion 3132 that is perpendicular to the radial direction (r-direction) may be set to be equal to the width W4 of the fourth region Z4. In addition, the height H of the extended bent portion 3132 protruded from the upper surface of the core body 3131 may be larger than the thickness t of the core body 3131.

The height H of the extended bent portion 3132 may be determined for the upper end of the extended bent portion 3132 not to pass through the exposure hole 3113b2 of the core accommodation portion 3113b. This is to prevent the ferrite core 313 from being damaged by the load directly transmitted to the extended bent portion 3132 through the cover plate when the upper end of the extended bent portion 3132 is extended to a position higher than the exposure hole 3113b2 after passing through the exposure hole.

Chamfers may be formed in four corners of the upper surface 3132a of the extended bent portion 3132, respectively, to facilitate the convenience of entering and assembling into the exposure hole 3113b2. Through the chamfers, the effective area of the top surface 3132a of the extended bent portion 3132 may be maintained substantially smaller than the inner area of the exposure hole 3113b2.

The embodiments are described above with reference to a number of illustrative embodiments thereof. However, the present disclosure is not intended to limit the embodiments and drawings set forth herein, and numerous other modifications and embodiments can be devised by one skilled in the art. Further, the effects and predictable effects based on the configurations in the disclosure are to be included within the range of the disclosure though not explicitly described in the description of the embodiments.

**[Numeral Description]**

| | | | |
|---|---|---|---|
| 1: | Electric range | 10: | Case |
| 20: | Cover plate | 30: | Heating portion |
| 31: | First heating portion | 32: | Second heating portion |
| 33: | Third heating portion | 40: | Upper bracket |
| 50: | Base bracket | 60: | Temperature sensing portion |
| 70: | Cover bracket | 80: | Control circuit board module |
| 90: | Ventilation module | | |

## Claims

1. An electric range comprising:
a cover plate (20) on which a heating target is disposed; and
a heating portion (30, 31, 32, 33) comprising a working coil (31) to which high-frequency power is applied and configured to heat the heating target by using a magnetic field generated from the working coil (31),
wherein the heating portion (30, 31, 32, 33) comprises,
a core frame (311, 321, 331) having an upper surface around which the working coil (31) is wound; and
a plurality of ferrite cores (313, 323) radially disposed under the core frame (311, 321, 331) along a direction toward a radial outside from a center of the core frame (311, 321, 331),
the core frame (311, 321, 331) comprises a through hole (3113c) formed between neighboring ones of the plurality of ferrite cores (313, 323) and configured to facilitate communication between the inside and the outside of the core frame (311, 321, 331),
the plurality of ferrite cores (313, 323) have the same shape and the same size,
**characterized in that**
the plurality of ferrite cores (313, 323) have asymmetry shape based on the radial direction, and
wherein the ferrite core (313, 323) comprises a plate-shaped core body (3131) having an inner end directed toward the center of the core frame (311, 321, 331) and an outer end directed toward the radial outside of the core frame (311, 321, 331), and
wherein the core body (3131) comprises,
a first region (Z1) having a width gradually extended in a direction perpendicular to the radial direction while proceeding from the inner end along the radial direction;
a second region (Z2) continuously formed in the radial outside with respect to the first region (Z1) and having a width maintained constant in the direction perpendicular to the radial direction;
a third region (Z3) continuously formed with the radial outside with respect to the second region (Z2) and having a width gradually reduced in a direction perpendicular to the radial direction; and
a fourth region (Z4) continuously formed with the radially outer side with respect to the third region (Z3) and having a width maintained constant in a direction perpendicular to the radial direction;
wherein the through hole (3113c) is formed more outside than the first region (Z1) with respect to the radial direction, and
wherein the through hole (3113c) is formed between the first region (Z1) and the fourth region (Z4) with respect to the radial direction.

2. The electric range of claim 1, wherein the plurality of ferrite cores (313, 323) are arranged at equal intervals, respectively.

3. The electric range of claim 1 or 2, wherein a thickness of the core body (3131) is maintained constant while proceeding from the inner end to the outer end along the radial direction.

4. The electric range of any one of claims 1 to 3, wherein the first region (Z1) comprises a first lateral surface (3131d) and a second lateral surface (3131e) that are gradually spaced apart from each other while proceeding from the inner end toward the outside in the radial direction.

5. The electric range of claim 4, wherein the first lateral surface (3131d) is extended from the inner end linearly and forms a first extension angle with respect to the radial direction, and
the second lateral surface (3131e) is extended from the inner end linearly and forms a second extension angle with respect to the radial direction, and
the first extension angle is equal to or larger than the second extension angle.

6. The electric range of claim 4 or 5, wherein a length of the second lateral surface (3131e) is larger than a length of the first lateral surface (3131d).

7. The electric range of any one of claims 1 to 6, wherein the ferrite core (313, 323) further comprises,
an extended bent portion (3132) protruded upward from an upper surface of the core body (3131), and
wherein the extended bent portion (3132) is integrally formed with the core body (3131).

8. The electric range of claim 7, wherein the extended bent portion (3132) is integrally formed with the fourth region (Z4) of the core body (3131), and
wherein a width of the extended bent portion (3132) in the direction perpendicular to the radial direction is equal to the width of the fourth region (Z4) in the direction perpendicular to the radial direction.

9. The electric range of claim 7, wherein the protrusion height of the extended bent portion (3132) protruded from the upper surface of the core body (3131) is greater than the thickness of the core body (3131).

10. The electric range of any one of claims 7 to 9, wherein the core frame (311, 321, 331) comprises,
a disk portion (3111) comprising an upper surface around which the working coil (31) is wound and in which the through hole (3113c) is formed; and
an edge wall (3112) extended downward from a radial outer end of the disk portion (3111), and
wherein the extended bent portion (3132) and the fourth region (Z4) of the core body (3131) are extended outward with respect to the radial direction after at least partially passing through the edge wall (3112).

11. The electric range of claim 10, wherein the extended bent portion (3132) is disposed in a radially outer side of the edge wall (3112) after passing through the edge wall (3112) as a whole.

12. The electric range of claim 10 or 11, wherein the core frame (311, 321, 331) further comprises a core accommodation portion (3113b) protruded downward from a lower surface of the disk portion (3111) and configured to accommodate the ferrite core (313, 323), and
the extended bent portion (3132) is disposed in a radially outer end of the core accommodation portion (3113b), and
the radially outer end of the core accommodation portion (3113b) is protruded outward with respect to a radial direction of the edge wall (3112) after passing through the edge wall (3112);
and preferably
wherein an exposure hole (3113b2) is provided in an upper surface of the radially outer end of the core accommodation portion (3113b), and the exposure hole (3113b2) is at least partially opened upward, and
wherein the upper end of the extended bent portion (3132) is exposed outside through the exposure hole (3113b2).

## Patentansprüche

1. Elektroherd, der aufweist:
eine Abdeckplatte (20), auf der ein zu erwärmendes Objekt angeordnet ist; und
einen Heizabschnitt (30, 31, 32, 33), der eine Arbeitsspule (31) aufweist, an die Hochfrequenzleistung angelegt wird und der konfiguriert ist, das zu erwärmende Objekt unter Verwendung eines von der Arbeitsspule (31) erzeugten Magnetfelds zu erwärmen, wobei der Heizabschnitt (30, 31, 32, 33) aufweist:
einen Kernrahmen (311, 321, 331) mit einer Oberseite, um die die Arbeitsspule (31) gewickelt ist; und
mehrere Ferritkerne (313, 323), die radial unter dem Kernrahmen (311, 321, 331) entlang einer Richtung von der Mitte des Kernrahmens (311, 321, 331) zu einer radialen Außenseite angeordnet sind,
wobei der Kernrahmen (311, 321, 331) ein Durchgangsloch (3113c) aufweist, das zwischen benachbarten der mehreren Ferritkerne (313, 323) ausgebildet und so konfiguriert ist, dass es die Verbindung zwischen dem Inneren und dem Äußeren des Kernrahmens (311, 321, 331) erleichtert,
die mehreren Ferritkerne (313, 323) dieselbe Form und dieselbe Größe aufweisen,
**dadurch gekennzeichnet, dass**
die mehreren Ferritkerne (313, 323) bezogen auf die radiale Richtung eine asymmetrische Form aufweisen, und
wobei der Ferritkern (313, 323) einen plattenförmigen Kernkörper (3131) aufweist, der ein zur Mitte des Kernrahmens (311, 321, 331) gerichtetes inneres Ende und ein zur radialen Außenseite des Kernrahmens (311, 321, 331) gerichtetes äußeres Ende aufweist, und
wobei der Kernkörper (3131) aufweist:
einen ersten Bereich (Z1), dessen Breite sich in einer Richtung senkrecht zur radialen Richtung allmählich erweitert, während er sich vom inneren Ende entlang der radialen Richtung fortsetzt;
einen zweiten Bereich (Z2), der fortlaufend in der radialen Außenseite bezüglich des ersten Bereichs (Z1) ausgebildet ist und dessen Breite in der Richtung senkrecht zur radialen Richtung konstant bleibt;
einen dritten Bereich (Z3), der fortlaufend in der radialen Außenseite bezüglich des zweiten Bereichs (Z2) ausgebildet ist und dessen Breite in einer Richtung senkrecht zur radialen Richtung allmählich abnimmt; und
einen vierten Bereich (Z4), der fortlaufend in der radialen Außenseite bezüglich des dritten Bereichs (Z3) ausgebildet ist und dessen Breite in einer Richtung senkrecht zur radialen Richtung konstant bleibt;
wobei das Durchgangsloch (3113c) in Bezug auf die radiale Richtung weiter außen als der erste Bereich (Z1) ausgebildet ist, und
wobei das Durchgangsloch (3113c) in Bezug auf die radiale Richtung zwischen dem ersten Bereich (Z1) und dem vierten Bereich (Z4) ausgebildet ist.

2. Elektroherd nach Anspruch 1, wobei die mehreren Ferritkerne (313, 323) jeweils in gleichen Abständen angeordnet sind.

3. Elektroherd nach Anspruch 1 oder 2, wobei eine Dicke des Kernkörpers (3131) konstant bleibt, während er sich vom inneren Ende zum äußeren Ende entlang der radialen Richtung fortsetzt.

4. Elektroherd nach einem der Ansprüche 1 bis 3, wobei der erste Bereich (Z1) eine erste laterale Fläche (3131d) und eine zweite laterale Fläche (3131e) aufweist, die allmählich voneinander beabstandet werden, während sie sich vom inneren Ende zur Außenseite hin in radialer Richtung fortsetzen.

5. Elektroherd nach Anspruch 4, wobei sich die erste laterale Fläche (3131d) vom inneren Ende linear erstreckt und einen ersten Ausdehnungswinkel in Bezug auf die radiale Richtung bildet, und
sich die zweite laterale Fläche (3131e) vom inneren Ende linear erstreckt und einen zweiten Ausdehnungswinkel in Bezug auf die radiale Richtung bildet, und
der erste Ausdehnungswinkel gleich dem zweiten Ausdehnungswinkel oder größer als dieser ist.

6. Elektroherd nach Anspruch 4 oder 5, wobei eine Länge der zweiten lateralen Fläche (3131e) größer ist als eine Länge der ersten lateralen Fläche (3131d).

7. Elektroherd nach einem der Ansprüche 1 bis 6, wobei der Ferritkern (313, 323) ferner aufweist:
einen verlängerten, gebogenen Abschnitt (3132), der von einer Oberseite des Kernkörpers (3131) nach oben vorsteht, und
wobei der verlängerte, gebogene Abschnitt (3132) integral mit dem Kernkörper (3131) ausgebildet ist.

8. Elektroherd nach Anspruch 7, wobei der verlängerte, gebogene Abschnitt (3132) integral mit dem vierten Bereich (Z4) des Kernkörpers (3131) ausgebildet ist, und
wobei eine Breite des verlängerten, gebogenen Abschnitts (3132) in der Richtung senkrecht zur radialen Richtung gleich der Breite des vierten Bereichs (Z4) in der Richtung senkrecht zur radialen Richtung ist.

9. Elektroherd nach Anspruch 7, wobei die Vorsprungshöhe des verlängerten, gebogenen Abschnitts (3132), der von der Oberseite des Kernkörpers (3131) vorsteht, größer ist als die Dicke des Kernkörpers (3131).

10. Elektroherd nach einem der Ansprüche 7 bis 9, wobei der Kernrahmen (311, 321, 331) aufweist:
einen Scheibenabschnitt (3111), der eine Oberseite aufweist, um die die Arbeitsspule (31) gewickelt ist und in der das Durchgangsloch (3113c) ausgebildet ist; und
eine Randwand (3112), die sich von einem radialen äußeren Ende des Scheibenabschnitts (3111) nach unten erstreckt, und
wobei sich der verlängerte, gebogene Abschnitt (3132) und der vierte Bereich (Z4) des Kernkörpers (3131) in Bezug auf die radiale Richtung nach außen erstrecken, nachdem sie zumindest teilweise die Randwand (3112) durchquert haben.

11. Elektroherd nach Anspruch 10, wobei der verlängerte, gebogene Abschnitt (3132) an einer radial äußeren Seite der Randwand (3112) angeordnet ist, nachdem er als Ganzes die Randwand (3112) durchquert hat.

12. Elektroherd nach Anspruch 10 oder 11, wobei der Kernrahmen (311, 321, 331) ferner einen Kernaufnahmeabschnitt (3113b) aufweist, der von einer Unterseite des Scheibenabschnitts (3111) nach unten vorsteht und konfiguriert ist, den Ferritkern (313, 323) aufzunehmen, und
der verlängerte, gebogene Abschnitt (3132) in einem radial äußeren Ende des Kernaufnahmeabschnitts (3113b) angeordnet ist, und
das radial äußere Ende des Kernaufnahmeabschnitts (3113b) in Bezug auf eine radiale Richtung der Randwand (3112) nach außen vorsteht, nachdem er die Randwand (3112) durchquert hat;
und vorzugsweise
wobei eine Freilegungsöffnung (3113b2) in einer Oberseite des radial äußeren Endes des Kernaufnahmeabschnitts (3113b) vorgesehen ist und die Freilegungsöffnung (3113b2) zumindest teilweise nach oben hin offen ist, und
wobei das obere Ende des verlängerten, gebogenen Abschnitts (3132) durch die Freilegungsöffnung (3113b2) nach außen freigelegt ist.

## Revendications

1. Cuisinière électrique comprenant :
une plaque de recouvrement (20) sur laquelle est disposée un objet à chauffer ; et
une partie chauffante (30, 31, 32, 33) comprenant une bobine de travail (31) à laquelle est appliquée une puissance à haute fréquence et configurée pour chauffer l'objet à chauffer à l'aide d'un champ magnétique généré par la bobine de travail (31),
dans laquelle la partie chauffante (30, 31, 32, 33) comprend :
un cadre de noyau (311, 321, 331) présentant une surface supérieure autour de laquelle est enroulée la bobine de travail (31) ; et
une pluralité de noyaux de ferrite (313, 323) disposés radialement sous le cadre de noyau (311, 321, 331) selon une direction s'étendant vers l'extérieur radial à partir du centre du cadre de noyau (311, 321, 331),
le cadre de noyau (311, 321, 331) comprend un trou traversant (3113c) formé entre des noyaux voisins de la pluralité de noyaux de ferrite (313, 323) et configuré pour faciliter la communication entre l'intérieur et l'extérieur du cadre de noyau (311, 321, 331),
la pluralité de noyaux de ferrite (313, 323) présente la même forme et les mêmes dimensions,
**caractérisée en ce que**
la pluralité de noyaux de ferrite (313, 323) présente une forme asymétrique par rapport à la direction radiale, et
dans laquelle le noyau de ferrite (313, 323) comprend un corps de noyau (3131) en forme de plaque présentant une extrémité intérieure dirigée vers le centre du cadre de noyau (311, 321, 331) et une extrémité extérieure dirigée vers l'extérieur radial du cadre de noyau (311, 321, 331), et
dans laquelle le corps de noyau (3131) comprend,
une première région (Z1) présentant une largeur s'étendant progressivement dans une direction perpendiculaire à la direction radiale à mesure que l'on s'éloigne de l'extrémité intérieure le long de la direction radiale ;
une deuxième région (Z2) formée de manière continue du côté radialement extérieur par rapport à la première région (Z1) et présentant une largeur maintenue constante dans la direction perpendiculaire à la direction radiale ;
une troisième région (Z3) formée de manière continue du côté radialement extérieur par rapport à la deuxième région (Z2) et présentant une largeur qui diminue progressivement dans une direction perpendiculaire à la direction radiale ; et
une quatrième région (Z4) formée de manière continue du côté radialement extérieur par rapport à la troisième région (Z3) et présentant une largeur maintenue constante dans une direction perpendiculaire à la direction radiale ;
dans laquelle le trou traversant (3113c) est formé plus à l'extérieur que la première région (Z1) par rapport à la direction radiale, et
dans laquelle le trou traversant (3113c) est formé entre la première région (Z1) et la quatrième région (Z4) par rapport à la direction radiale.

2. Cuisinière électrique selon la revendication 1, dans laquelle la pluralité de noyaux de ferrite (313, 323) sont disposés respectivement à intervalles égaux.

3. Cuisinière électrique selon la revendication 1 ou 2, dans laquelle l'épaisseur du corps de noyau (3131) est maintenue constante en allant de l'extrémité intérieure à l'extrémité extérieure le long de la direction radiale.

4. Cuisinière électrique selon l'une quelconque des revendications 1 à 3, dans laquelle la première région (Z1) comprend une première surface latérale (3131d) et une deuxième surface latérale (3131e) qui s'espacent progressivement l'une de l'autre en allant de l'extrémité intérieure vers l'extérieur dans la direction radiale.

5. Cuisinière électrique selon la revendication 4, dans laquelle la première surface latérale (3131d) s'étend de manière linéaire à partir de l'extrémité intérieure et forme un premier angle d'extension par rapport à la direction radiale, et
la deuxième surface latérale (3131e) s'étend de manière linéaire à partir de l'extrémité intérieure et forme un deuxième angle d'extension par rapport à la direction radiale, et le premier angle d'extension est égal ou supérieur au deuxième angle d'extension.

6. Cuisinière électrique selon la revendication 4 ou 5, dans laquelle la longueur de la deuxième surface latérale (3131e) est supérieure à celle de la première surface latérale (3131d).

7. Cuisinière électrique selon l'une quelconque des revendications 1 à 6, dans laquelle le noyau de ferrite (313, 323) comprend en outre :
une partie courbée prolongée (3132) faisant saillie vers le haut à partir d'une surface supérieure du corps de noyau (3131), et
dans laquelle la partie courbée prolongée (3132) est formée d'un seul tenant avec le corps de noyau (3131).

8. Cuisinière électrique selon la revendication 7, dans laquelle la partie courbée prolongée (3132) est formée d'un seul tenant avec la quatrième région (Z4) du corps de noyau (3131), et
dans laquelle la largeur de la partie courbée prolongée (3132) dans la direction perpendiculaire à la direction radiale est égale à la largeur de la quatrième région (Z4) dans la direction perpendiculaire à la direction radiale.

9. Cuisinière électrique selon la revendication 7, dans laquelle la hauteur de saillie de la partie courbée prolongée (3132) faisant saillie depuis la surface supérieure du corps de noyau (3131) est supérieure à l'épaisseur du corps de noyau (3131).

10. Cuisinière électrique selon l'une quelconque des revendications 7 à 9, dans laquelle le cadre de noyau (311, 321, 331) comprend :
une partie en forme de disque (3111) comportant une surface supérieure autour de laquelle est enroulée la bobine de travail (31) et dans laquelle est formé le trou traversant (3113c) ; et
une paroi de bord (3112) s'étendant vers le bas à partir d'une extrémité radiale extérieure de la partie en forme de disque (3111), et
dans laquelle la partie courbée prolongée (3132) et la quatrième région (Z4) du corps de noyau (3131) s'étendent vers l'extérieur par rapport à la direction radiale après avoir traversé au moins partiellement la paroi de bord (3112).

11. Cuisinière électrique selon la revendication 10, dans laquelle la partie courbée prolongée (3132) est disposée sur un côté radialement extérieur de la paroi de bord (3112) après avoir traversé la paroi de bord (3112) dans son ensemble.

12. Cuisinière électrique selon la revendication 10 ou 11, dans laquelle le cadre de noyau (311, 321, 331) comprend en outre une partie de logement de noyau (3113b) faisant saillie vers le bas à partir d'une surface inférieure de la partie en forme de disque (3111) et configurée pour loger le noyau de ferrite (313, 323), et
la partie courbée prolongée (3132) est disposée à une extrémité radialement extérieure de la partie de logement de noyau (3113b), et
l'extrémité radialement extérieure de la partie de logement de noyau (3113b) fait saillie vers l'extérieur par rapport à une direction radiale de la paroi de bord (3112) après avoir traversé la paroi de bord (3112) ;
et de préférence
dans laquelle un orifice d'exposition (3113b2) est prévu dans une surface supérieure de l'extrémité radialement extérieure de la partie de logement de noyau (3113b), et l'orifice d'exposition (3113b2) est au moins partiellement ouvert vers le haut, et
dans laquelle l'extrémité supérieure de la partie courbée prolongée (3132) est exposée à l'extérieur à travers l'orifice d'exposition (3113b2).
